# FASCICULE DE BREVET EUROPEEN

(11) **EP 1 605 856 B1**
(45) Date de publication et mention de la délivrance du brevet: **17.01.2007**
(21) Numéro de dépôt: 04720047.2
(22) Date de dépôt: 12.03.2004
(51) Int. Cl.: A61C 1/05

(54) **CORDON D'ALIMENTATION MULTIFONCTION POUR PIECE A MAIN MEDICALE**
MEHRZWECKLEITUNG FÜR MEDIZINISCHES HANDSTÜCK
MULTI-FUNCTIONAL POWER CORD FOR MEDICAL HANDPIECE

(30) Priorité: 14.03.2003 FR 0303178
(43) Date de publication de la demande: 21.12.2005
(73) Titulaire: Satelec-Société pour la conception des applications des Techniques Electroniques, F-33700 Merignac (FR)
(72) Inventeur: MARIAULLE, Dominique, 33160 Saint-Aubin du Médoc (FR); TERRADE, Pierre Résidence Le Parc des Tourelles, F-33200 Bordeaux (FR)
(74) Mandataire: Puiroux, Guy
(86) Numéro de dépôt international: PCT/FR2004/000606
(87) Numéro de publication internationale: WO 2004/082457

(56) Documents cités:
- FR-A- 2 059 113
- GB-A- 1 048 358
- US-A- 4 958 423

## Description

La présente invention concerne un cordon d'alimentation multifonction pour une pièce à main médicale et plus précisément un tel cordon équipé d'un mécanisme permettant d'assurer de façon facile la mise en oeuvre de celui-ci.

On sait que les pièces à main dentaires sont alimentées en énergie et en fluides divers par un cordon souple qui les relie au bloc supportant les divers instruments. Ainsi, ce cordon peut notamment véhiculer l'alimentation en énergie électrique, et l'alimentation en eau et/ou en air de la pièce à main comme celui du brevet US 4 958 423. Mais il advient parfois que, pour certains travaux, l'on équipe la pièce à main d'une ligne d'alimentation en liquide stérile. Pour ce faire on fait appel à une conduite souple extérieure que l'on relie à l'une de ses extrémités à la pièce à main et à son autre extrémité à des moyens d'alimentation en fluide stérile. Entre les deux la ligne stérile suit sensiblement le cordon d'alimentation de la pièce à main sur lequel on la fixe, par exemple au moyen de clips que l'on dispose de place en place sur toute sa longueur.

Un inconvénient majeur d'une telle disposition est que, en cours d'utilisation, les courbures diverses auxquelles le cordon d'alimentation est soumis ont pour effet, en raison de la présence des clips qui empêchent la conduite de se déformer comme son cordon support, de former de multiples boucles entre chaque série de clips. Ces boucles outre leur caractère particulièrement inesthétique, se révèlent à l'usage, dangereuses dans la mesure où elles ont tendance à s'accrocher dans les divers autres instruments qui se trouvent dans le voisinage du cordon. De plus ils rendent plus difficile le nettoyage du cordon.

La présente invention a pour but de remédier à ces inconvénients en proposant un cordon permettant d'éviter les boucles et leur caractère inesthétique, et anti-fonctionnel, voire même dangereux, et qui est pourvu d'un mécanisme permettant d'assurer une mise en place facile et rapide d'une conduite souple à l'intérieur de ce cordon.

La présente invention a ainsi pour objet un cordon d'alimentation pour pièce à main médicale, notamment dentaire, comportant au moins un logement s'étendant longitudinalement de l'une à l'autre de ses extrémités, et au moins un logement annexe longitudinal pourvu d'une fente radiale qui s'étend sur toute sa longueur et qui met le logement annexe en communication avec l'extérieur, ce logement annexe étant destiné à recevoir une conduite souple amovible, caractérisé en ce qu'il est équipé d'un mécanisme de mise en place de ladite conduite souple dans ledit logement annexe, ce mécanisme comportant :
- des moyens permettant son positionnement sur le cordon,
- des moyens permettant le positionnement de la conduite souple à l'entrée de la fente du cordon,
- des moyens applicateurs aptes à enfoncer la conduite dans le logement annexe à travers la fente, lorsque l'on déplace le mécanisme le long du cordon.

Préférentiellement ce mécanisme comportera :
- un cavalier pourvu à sa base d'un logement ouvert sur l'extérieur destiné à permettre son positionnement sur le cordon, et à sa partie interne supérieure d'un écarteur apte à pénétrer dans la fente du cordon pour l'ouvrir,
- un obturateur mobile apte à occuper deux positions, par rapport au cavalier, à savoir une position ouverte dans laquelle il permet le positionnement du cavalier sur le cordon, et une position fermée dans laquelle il assure le maintien en position du cavalier sur le cordon,
- un applicateur mobile, apte à occuper deux positions par rapport au cavalier, à savoir une position ouverte dans laquelle il permet l'introduction de la conduite sur le cavalier, et une position fermée, cet applicateur comportant sur sa partie interne antérieure des moyens de réception de la conduite qui se prolongent vers l'arrière par une butée destinée à appuyer sur la conduite pour la positionner dans le logement annexe à travers la fente, lorsqu'il se trouve en position fermée.

Le cordon d'alimentation suivant l'invention pourra être réalisé en un matériau souple déformable et le logement annexe longitudinal possédera une section droite légèrement inférieure à celle de la conduite souple amovible de façon à exercer sur celle-ci un effort de maintien lorsqu'elle est en place dans le logement annexe.

Suivant l'invention, la fente radiale pourra être formée de construction ou être réalisée par l'utilisateur lui-même. La présente invention a ainsi pour objet un outil de découpe apte à réaliser dans un cordon d'alimentation pour pièce à main médicale, notamment dentaire, comportant au moins un logement s'étendant longitudinalement de l'une à l'autre de ses extrémités et comportant au moins logement annexe longitudinal destiné à recevoir une conduite souple amovible, une fente radiale mettant le logement annexe en communication avec l'extérieur, caractérisé en ce qu'il comporte un élément de préhension pourvu à sa base d'un élément guide d'axe longitudinal apte à prendre position dans le logement annexe et à se déplacer dans celui-ci, qui est surmonté d'un élément de coupe d'une hauteur au moins égale à l'épaisseur de la paroi séparant le logement annexe de l'extérieur.

Préférentiellement l'élément de coupe sera constitué d'une lame dont le bord d'attaque sera incliné par rapport à un axe perpendiculairement à l'axe longitudinal de l'élément guide.

On décrira ci-après, à titre d'exemple non limitatif, une forme d'exécution de la présente invention, en référence au dessin annexé sur lequel :
La figure 1 est une vue schématique d'une installation dentaire utilisant un cordon d'alimentation suivant l'invention.
La figure 2 est une vue en section droite d'un cordon d'alimentation suivant l'invention, avant la mise en place dans celui-ci d'une ligne d'irrigation.
La figure 3 est une vue en section droite du cordon suivant l'invention représenté sur la figure 2 après la mise en place dans celui-ci d'une ligne d'irrigation.
La figure 4 est une vue en perspective représentant un dispositif destiné à faciliter la mise en place d'une conduite souple d'irrigation à l'intérieur d'un logement annexe du cordon d'alimentation suivant l'invention.
La figure 5 est une vue en perspective du dispositif représenté sur la figure 4, une fois celui-ci positionné sur le cordon d'alimentation de la pièce à main.
La figure 6 est une vue en perspective du dispositif représenté sur les figures 4 et 5 en position de fonctionnement.
La figure 7 est une vue en plan d'un outil de découpe permettant de réaliser, dans un cordon d'alimentation suivant l'invention, une fente radiale longitudinale mettant le logement annexe en communication avec l'extérieur.
La figure 8 est une vue de côté de l'outil représenté sur la figure 7.
La figure 9 est une vue en section droite d'une variante de mise en oeuvre d'un cordon d'alimentation suivant l'invention.

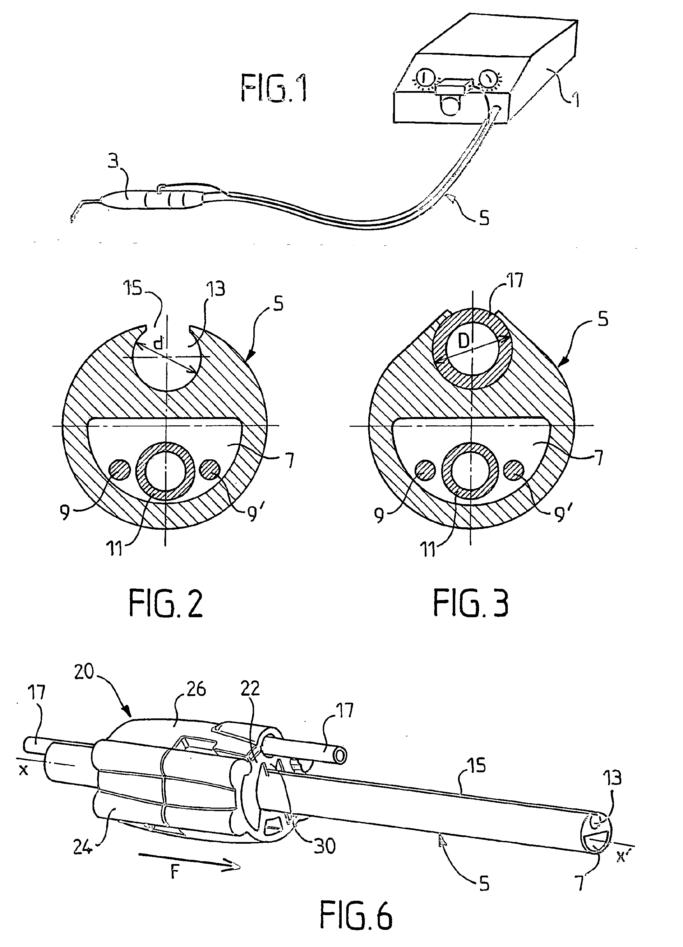

On a représenté, de façon schématique sur la figure 1 une installation comprenant une unité dentaire 1 qui est reliée à une pièce à main 3 par un cordon d'alimentation 5. Ce cordon, dont la section droite est représentée à échelle agrandie sur les figures 2 et 3, comprend un premier logement longitudinal 7 qui s'étend de l'une de ses extrémités à l'autre. Le logement 7 reçoit par exemple deux gaines électriques 9 et 9' qui renferment un nombre de conducteurs suffisants pour assurer l'alimentation en énergie électrique de la pièce à main 3 et de ses accessoires. Le logement 7 reçoit également un tuyau 11 assurant l'alimentation en eau de la pièce à main 3.

Le cordon 5 comprend également un second logement 13, ou logement annexe, qui s'étend également sur toute la longueur du cordon, qui est sensiblement parallèle au premier et qui, dans le présent mode de mise en oeuvre de l'invention, est en communication avec l'extérieur par une fente longitudinale et radiale 15.

Le cordon 5 est réalisé dans un matériau élastomère qui lui confère des caractéristiques relativement élastiques lui permettant de se déformer suffisamment pour qu'une conduite souple 17, notamment une ligne d'irrigation, puisse traverser la fente 15 et prendre position dans le logement annexe 13.

Préférentiellement, le diamètre d du logement 13 sera légèrement inférieur à celui D de la conduite 17 de façon que, lorsque celle-ci est en place dans le logement 13, elle y soit maintenue sous l'effet de la déformation élastique du cordon 5 et/ou de la conduite souple 17.

Suivant l'invention le praticien qui souhaite mettre en service, entre la pièce à main 3 et l'unité dentaire 1, une ligne d'irrigation formée d'une conduite souple 17, introduit celle-ci par la fente 15 dans le logement annexe 13, ainsi que représenté sur la figure 3. Bien que la mise en place de la conduite souple 17 dans le logement annexe 13 du cordon puisse s'effectuer de façon manuelle, l'expérience a montré qu'il était particulièrement difficile de réaliser ainsi un tel assemblage dès lors que le cordon atteignait un certain niveau de souplesse. C'est pourquoi on fait appel à un mécanisme de positionnement maintenant la fente 15 ouverte pendant la mise en place dans celle-ci de la ligne d'irrigation 17.

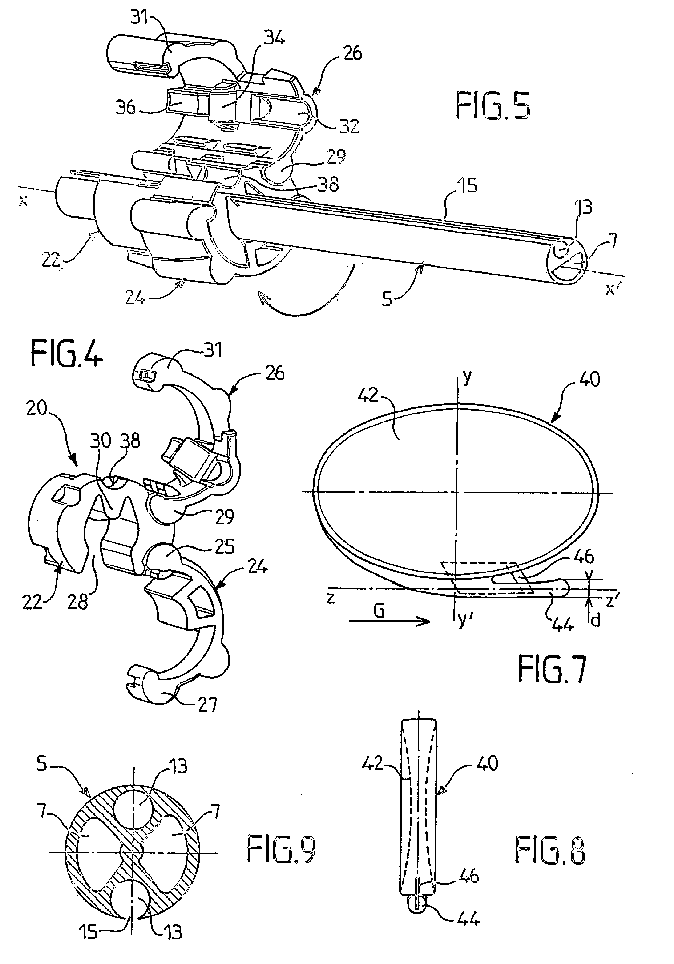

Un tel mécanisme de positionnement 20 qui est représenté à titre d'exemple sur les figures 4 à 6 est essentiellement constitué de trois éléments, à savoir un cavalier 22, un obturateur 24 et un applicateur 26.

Le cavalier 22 est constitué d'un élément longitudinal comportant à sa partie inférieure une fente 28 destinée à recevoir le cordon 5. La partie supérieure de la fente 28 comporte une protubérance 30 à section droite en forme de V dirigée vers le bas qui est destinée à pénétrer à l'intérieur de la fente 15 du cordon 5 lorsque l'on introduit celui-ci dans la fente 28 de façon à l'écarter. Une fois le cordon 5 introduit dans cette dernière, on ferme la fente 28 au moyen de l'obturateur 24, qui à cet effet possède une extrémité 25 qui est montée mobile en rotation à la base du cavalier 22 et dont l'autre extrémité 27 est en mesure de se fixer par clipsage sur le cavalier 22. On a représenté sur la figure 5 le cordon 5 positionné dans le cavalier 22 après rotation de l'obturateur 24 et fixation de celui-ci sur le cavalier 22.

L'applicateur 26 est également monté à rotation par une extrémité 29 sur le cavalier 22 et son autre extrémité 31 est en mesure de se fixer par clipsage sur celui-ci. La partie interne supérieure et antérieure de l'applicateur 26 est creusée d'une cavité longitudinale 32 destinée à recevoir la conduite d'irrigation 17. La cavité 32 se prolonge longitudinalement vers la partie postérieure par une butée applicateur 34 qui s'étend vers l'intérieur et dont l'épaisseur augmente de la partie antérieure vers la partie postérieure, et qui est suivie par un élément guide 36 constitué d'une cavité semi-cylindrique épousant le profil de la partie supérieure du cordon 5.

La partie supérieure du cavalier 22 est creusée d'une cavité longitudinale semi-cylindrique 38 qui est complémentaire de la cavité cylindrique semi-circulaire 32 prévue dans l'applicateur 26, de façon que, lorsque l'applicateur 26 est en position fermée, ou position d'utilisation, ainsi que représenté sur la figure 6, la conduite 17 puisse prendre place dans les deux cavités longitudinales 32 et 38.

Lorsque, ainsi que représenté sur la figure 6, le cavalier 22 est en place sur le cordon 5 et que l'obturateur 24 est refermé sur celui-ci, on comprend que l'écarteur 30 a pour effet d'ouvrir la fente 15, si bien que celle-ci est prête à recevoir la conduite 17. On introduit alors cette dernière dans la cavité 38 prévue à la partie supérieure du cavalier 22 et l'on referme l'applicateur 26 sur ce dernier. La butée applicateur 34 applique alors la conduite 17 dans le logement annexe longitudinal 13 du cordon 5 à travers la fente 15. Si l'on transmet au mécanisme de positionnement 20 un mouvement de déplacement longitudinal sur le cordon 5, dans le sens de la flèche F, la butée 34 applique au cours de ce déplacement le cordon 17 dans le logement annexe 13. Une fois celui-ci en place, l'élasticité du cordon 5 et/ou celle de la conduite 17 assure alors le maintien de cette dernière dans le logement. Si l'utilisateur effectue cette opération d'une extrémité du cordon 5 à l'autre extrémité de celui-ci, il effectue du même coup le positionnement de la conduite 17 dans le logement annexe 13. Une fois cette opération terminée, il suffira alors à l'utilisateur d'ouvrir l'applicateur 26 et l'obturateur 24 pour dégager complètement le mécanisme de positionnement du cordon 5 qui est équipé de la conduite 17.

On pourrait bien entendu, suivant l'invention, faire appel à tout autre dispositif applicateur permettant d'assurer l'introduction de la conduite 17 dans le logement longitudinal annexe 13 du cordon 5.

Une fois l'intervention dentaire terminée, pour récupérer la conduite stérile, il suffira au praticien d'exercer un effort à composante radiale sur l'une des extrémités de celle-ci pour qu'elle se libère du cordon 5.

Il peut être intéressant que le cordon 5 ne dispose pas d'origine de la fente 15, lorsque par exemple il n'est pas prévu de faire appel à une conduite stérile. Il est cependant intéressant de donner au praticien la possibilité de mettre en oeuvre la présente invention en lui fournissant d'origine un cordon d'alimentation disposant d'un logement annexe longitudinal destiné à recevoir la conduite souple mais ne comportant pas de fente radiale. On décrira ci-après un outil de découpe permettant au praticien de réaliser lui-même la fente radiale mettant le logement annexe en communication avec l'extérieur.

On fera ainsi appel à un outil de découpe 40 comportant une partie de préhension 42 de forme sensiblement elliptique dans ce mode de mise en oeuvre qui est réalisée, par exemple, en une matière de synthèse et qui comporte à sa partie inférieure un élément guide 44 qui est constitué d'une protubérance allongée de section droite sensiblement circulaire, et d'un diamètre d' légèrement inférieur au diamètre d du logement annexe 13. L'élément guide 44 se raccorde à l'élément de préhension 42 à la base de l'outil et un logement est prévu dans l'élément 42 permettant de disposer dans celui-ci une lame de découpe 46. Préférentiellement, la face d'attaque de cette lame de découpe 46 est inclinée par rapport à l'axe y-y' de l'outil 40 qui est lui-même perpendiculaire à l'axe zz' de l'élément guide 44.

Dans ces conditions, lorsqu'un utilisateur disposant d'un cordon d'alimentation 5 qui n'est pas pourvu d'origine d'une fente radiale 15, souhaitera réaliser celle-ci afin d'introduire dans le logement annexe 13 une conduite souple, il y introduira préalablement l'élément guide 44 et animera d'un mouvement de déplacement rectiligne l'outil de découpe 40 dans la direction de la flèche G représentée sur la figure 7, suivant l'axe longitudinal xx' du cordon 5. Lors de ce déplacement, la face d'attaque de l'outil 46 réalisera à la partie supérieure du cordon une fente radiale 15 autorisant la mise en place d'une conduite souple dans le logement annexe 13.

Bien entendu, on pourrait donner à un tel outil toute autre forme appropriée permettant à une ou plusieurs lames de découpe de réaliser la fente 15.

Le cordon d'alimentation multifonction suivant l'invention peut bien entendu comporter plusieurs logements annexes 13 destinés à recevoir des cordons souples, dans lesquels on réalisera une fente 15 de communication avec l'extérieur, ces fentes respectives pouvant être réalisées soit d'origine, soit par l'utilisateur lui-même. On a représenté sur la figure 9 un exemple d'un tel cordon dans lequel les logements longitudinaux 7, de section droite non circulaire, sont destinés à contenir des moyens d'alimentation pneumatique ou électrique de la pièce à main et les logements annexes 13 sont destinés à recevoir une conduite souple. Dans ce mode de mise en oeuvre seul le logement annexe inférieur 13 est pourvu de la fente 15 destinée à assurer sa communication avec l'extérieur.

## Revendications

1. Cordon d'alimentation (5) pour pièce à main médicale(3), notamment dentaire, comportant au moins un logement (7) s'étendant longitudinalement de l'une à l'autre de ses extrémités, et au moins un logement annexe longitudinal (13) pourvu d'une fente radiale (15) qui s'étend sur toute sa longueur et qui met le logement annexe (13) en communication avec l'extérieur, ce logement annexe étant destiné à recevoir une conduite souple amovible (17), **caractérisé en ce qu'**il est équipé d'un mécanisme de mise en place de ladite conduite souple dans ledit logement annexe, ce mécanisme comportant :
- des moyens (24) permettant son positionnement sur le cordon (5),
- des moyens permettant le positionnement de la conduite souple (17) à l'entrée de la fente (15) du cordon (5),
- des moyens applicateurs (34) aptes à enfoncer la conduite (17) dans le logement annexe (13) à travers la fente (15), lorsque l'on déplace le mécanisme le long du cordon (5).

2. Cordon suivant la revendication 1 **caractérisé en ce que** ledit mécanisme comporte :
- un cavalier (22) pourvu à sa base d'un logement (28) ouvert sur l'extérieur destiné à permettre son positionnement sur le cordon (5), et à sa partie interne supérieure d'un écarteur (30) apte à pénétrer dans la fente (15) du cordon (5) pour l'ouvrir,
- un obturateur (24) mobile apte à occuper deux positions, par rapport au cavalier (22), à savoir une position ouverte dans laquelle il permet le positionnement du cavalier sur le cordon (5), et une position fermée dans laquelle il assure le maintien en position du cavalier sur le cordon,
- un applicateur (26) mobile, apte à occuper deux positions par rapport au cavalier (22), à savoir une position ouverte dans laquelle il permet l'introduction de la conduite (17) sur le cavalier et une position fermée, cet applicateur (26) comportant sur sa partie interne antérieure des moyens de réception de la conduite (17) qui se prolongent vers l'arrière par une butée (34) destinée à appuyer sur la conduite (17) pour la positionner dans le logement annexe (13) à travers la fente (15), lorsqu'il se trouve en position fermée.

3. Cordon d'alimentation suivant l'une des revendications 1 ou 2, **caractérisé en ce qu'**il est constitué d'un matériau souple déformable et que le logement longitudinal annexe (13) possède une section droite légèrement inférieure à celle de la conduite souple amovible, de façon à exercer sur celle-ci un effort de maintien lorsqu'elle est en place dans le logement annexe (13).

4. Outil de découpe apte à réaliser dans un cordon d'alimentation suivant la revendication 1 une fente radiale (17) mettant le logement annexe (13) en communication avec l'extérieur, **caractérisé en ce qu'**il comporte un élément de préhension (42) pourvu à sa base d'un élément guide (44) d'axe longitudinal (zz') apte à prendre position dans le logement annexe (13) et à se déplacer dans celui-ci, qui est surmonté d'un élément de coupe (46) d'une hauteur au moins égale à l'épaisseur de la paroi séparant le logement annexe (13) de l'extérieur.

5. Outil suivant la revendication 4, **caractérisé en ce que** l'élément de coupe est constitué d'une lame (46) dont le bord d'attaque est incliné par rapport à un axe (yy') perpendiculairement à l'axe longitudinal (zz') de l'élément guide (44).

## Claims

1. A power cord (5) for a medical, notably dental, handpiece (3) including at least one housing (7) extending longitudinally from one end to the other of its ends, and at least one longitudinal auxiliary housing (13) provided with a radial slot (15) which extends throughout its length and which has the auxiliary housing (13) communicate with the outside, this auxiliary housing being intended to receive a removable flexible conduit (17), **characterized in that** it is equipped with a mechanism for placing said flexible conduit in said auxiliary housing, this mechanism including:
- means (24) for positioning it on the cord (5),
- means for positioning the flexible conduit (17) at the entrance of the slot (15) of the cord (5),
- applicator means (34) capable of pushing the conduit (17) into the auxiliary housing (13) through the slot (15), when the mechanism is displaced along the cord (5).

2. The cord according to claim 1, **characterized in that** said mechanism includes:
- a jumper (22) provided on its base with a housing (28) opened on the outside intended for positioning it on the cord (5), and at its upper internal portion with a spacer (30) capable of penetrating into the slot (15) of the cord (5) in order to open it,
- a mobile obturator (24) capable of occupying two positions, relatively to the jumper (22), i.e., an open position, in which it allows the jumper to be positioned on the cord (5), and a closed position in which it ensures that the jumper is held in position on the cord,
- a mobile applicator (26) capable of occupying two positions relatively to the jumper (22), i.e., an open position in which it allows the conduit (17) to be introduced on the jumper and a closed position, this applicator (26) including on its front internal portion, means for receiving the conduit (17) which extend rearwards with a stop (34) intended to press on the conduit (17) in order to position it in the auxiliary housing (13) through the slot (15), when it is found in the closed position.

3. The power cord according to any of claims 1 or 2, **characterized in that** it consists of a deformable flexible material and **in that** the auxiliary longitudinal housing (13) has a cross-section slightly less than that of the removable flexible conduit so as to exert on the latter a holding force when it is placed in the auxiliary housing (13).

4. A cutting tool capable of making in a power cord according to claim 1, a radial slot (17) having the auxiliary housing (13) communicate with the outside, **characterized in that** it includes a gripping component (42) provided at its base with a guiding component (44) with a longitudinal axis (zz') capable of assuming a position in the auxiliary housing (13) and of moving in the latter, which is surmounted with a cutting component (46) with a height at least equal to the thickness of the wall separating the auxiliary housing (13) from the outside.

5. The tool according to claim 4, **characterized in that** the cutting component consists of a blade (46), the leading edge of which is inclined relatively to an axis (yy') perpendicularly to the longitudinal axis (zz') of the guiding component (44).

## Patentansprüche

1. Versorgungskabel (5) für ein medizinisches, insbesondere zahnmedizinisches Handstück (3), aufweisend mindestens eine Aufnahme (7), die sich in Längsrichtung von dem einen bis zu dem anderen von dessen Enden erstreckt, und mindestens eine sich in Längsrichtung erstreckende Nebenaufnahme (13), die mit einem radialen Schlitz (15) versehen ist, der sich über dessen gesamte Länge erstreckt und die Nebenaufnahme (13) in Kommunikationsverbindung mit dem Äußeren bringt, wobei die Nebenaufnahme dazu dient, eine herausnehmbare flexible Leitung (17) aufzunehmen, **dadurch gekennzeichnet, dass** es mit einem Mechanismus zum Einsetzen der flexiblen Leitung in die Nebenaufnahme ausgerüstet ist, wobei dieser Mechanismus aufweist:
- Einrichtungen (24), die dessen Positionierung auf dem Kabel (5) ermö glichen,
- Einrichtungen, welche die Positionierung der flexiblen Leitung (17) am Eingang des Schlitzes (15) des Kabels (5) ermö glichen,
- Eintragseinrichtungen (34), die geeignet sind, die Leitung (17) durch den Schlitz (15) hindurch in die Nebenaufnahme (13) hineinzudrücken, wenn man den Mechanismus entlang des Kabels (5) verschiebt.

2. Kabel nach Anspruch 1, **dadurch gekennzeichnet, dass** der Mechanismus aufweist:
- einen Reiter (22), der an seiner Basis mit einer nach außen hin offenen Aufnahme (28) versehen ist, die dessen Positionierung auf dem Kabel (5) ermö glicht, und an seinem inneren oberen Teil mit einer Spreizeinrichtung (30) versehen ist, die geeignet ist, in den Schlitz (15) des Kabels (5) einzudringen, um diesen zu öffnen,
- eine bewegliche Verschlusseinrichtung (24), die bezüglich des Reiters (22) zwei Positionen einnehmen kann, und zwar eine geöffnete Position, in der sie die Positionierung des Reiters auf dem Kabel (5) ermö glicht, und eine geschlossene Position, in der sie für das Halten der Position des Reiters auf dem Kabel sorgt,
- eine bewegliche Eintragseinrichtung (26), die geeignet ist, zwei Positionen bezüglich des Reiters (22) einzunehmen, und zwar eine geöffnete Position, in der sie das Einlegen der Leitung (17) auf den Reiter ermö glicht, und eine geschlossene Position, wobei die Eintragseinrichtung (26) an ihrem inneren vorderen Teil Einrichtungen zur Aufnahme der Leitung (17) aufweist, die sich nach hinten in einem Widerlager (34) fortsetzen, das dazu dient, auf die Leitung (17) Druck auszuüben, um diese durch den Schlitz (15) hindurch in der Nebenaufnahme (13) zu positionieren, wenn sie sich in der geschlossenen Position befindet.

3. Versorgungskabel nach einem der Ansprüche 1 oder 2, **dadurch gekennzeichnet, dass** es aus einem verformbaren flexiblen Material besteht und dass die in Längsrichtung verlaufende Nebenaufnahme (13) einen etwas kleineren Querschnitt als die herausnehmbare flexible Leitung hat, so dass auf diese eine Haltekraft ausgeübt wird, wenn diese in die Nebenaufnahme (13) eingelegt ist.

4. Schneidwerkzeug, das geeignet ist, in einem Versorgungskabel nach Anspruch 1 einen radialen Schlitz (17) auszubilden, der die Nebenaufnahme (13) in Kommunikationsverbindung mit dem Äußeren bringt, **dadurch gekennzeichnet, dass** es ein Greifelement (42) aufweist, das an seiner Basis mit einem Führungselement (44) mit einer Längsachse (zz') versehen ist, das geeignet ist, in der Nebenaufnahme (13) positioniert und in dieser verschoben zu werden, und oberhalb von dem ein Schneidelement (46) angebracht ist, dessen Hö he mindestens so groß wie die Dicke der Wand ist, welche die Nebenaufnahme (13) vom Äußeren trennt.

5. Werkzeug nach Anspruch 4, **dadurch gekennzeichnet, dass** das Schneidelement aus eine Klinge (46) besteht, deren Vorderkante bezüglich einer Achse (yy') geneigt ist, die zur Längsachse (zz') des Führungselementes (44) senkrecht ist.
